# EUROPÄISCHE PATENTSCHRIFT

(11) **EP 1 776 268 B1**
(45) Veröffentlichungstag und Bekanntmachung des Hinweises auf die Patenterteilung: **12.01.2011**
(21) Anmeldenummer: 05771841.3
(22) Anmeldetag: 11.08.2005
(51) Int. Cl.: B62D 55/112

(54) **FAHRWERK FÜR LANDWIRTSCHAFTLICHE MASCHINEN UND GELÄNDEGÄNGIGE FAHRZEUGE MIT ENDLOS-GURTBANDLAUFWERK SOWIE ENTSPRECHENDES GURTBANDLAUFWERK**
TRAVELING MECHANISM FOR AGRICULTURAL MACHINES AND OFF-ROAD VEHICLES HAVING AN ENDLESS BELT-BAND TRAVELLING GEAR AND A CORRESPONDING BELT-BAND TRAVELLING GEAR
MECANISME DE DEPLACEMENT POUR MACHINES AGRICOLES ET VEHICULES TOUT-TERRAINS A MECANISME DE ROULEMENT A COURROIE CONTINUE, ET MECANISME DE ROULEMENT A COURROIE CONTINUE CORRESPONDANT

(30) Priorität: 11.08.2004 WO PCT/DE2004/012552; 28.12.2004 WO PCT/DE2004/020124; 26.07.2005 DE 102005035507
(43) Veröffentlichungstag der Anmeldung: 25.04.2007
(73) Patentinhaber: Deere & Company, Moline, IL 61265-8098 (US)
(72) Erfinder: RAINER, Johann, 84177 Gottfrieding (DE)
(74) Vertreter: Holst, Sönke
(86) Internationale Anmeldenummer: PCT/EP2005/008716
(87) Internationale Veröffentlichungsnummer: WO 2006/018215

(56) Entgegenhaltungen:
- WO-A-93/19975
- DE-A1- 4 415 689
- DE-A1- 19 919 959
- DE-U1- 20 000 737
- US-A- 5 316 381
- US-A- 5 997 109

## Beschreibung

Die vorliegende Erfindung betrifft ein Fahrwerk für landwirtschaftliche Maschinen und geländegängige Fahrzeuge mit Endlos-Gurtbandlaufwerk. Die Erfindung betrifft ferne ein Gurtbandlaufwerk, insbesondere ein gefedertes, auflagekraftoptimiertes Gurtbandlaufwerk, das u.a. für selbstfahrende Landmaschinen und sonstige Off-Road-Fahrzeuge geeignet ist. Die Erfindung betrifft weiterhin ein Landfahrzeug mit einem gefederten, auflagekraftoptimierten Gurtbandlaufwerk.

### Stand der Technik

Landfahrzeuge, die in der Landwirtschaft eingesetzt werden, weisen üblicherweise eine Luftbereifung auf, welche die Schnittstelle zum Boden herstellt. Die Bereifung muss einerseits das Fahrzeuggewicht abstützen und zum anderen für die notwendige Traktion sorgen. Bei sehr schweren Fahrzeugen, bspw. bei selbstfahrenden Erntemaschinen, entstehen trotz einer sehr breiten Bereifung mit sechs oder mehr einzelnen Rädern relativ hohe Flächenpressungen unterhalb der Reifenaufstandsflächen, die insbesondere bei feuchtem Ackerboden zu einer unzulässig hohen Schadverdichtung führen können. An diesem Problem vermag auch ein reduzierter Reifeninnendruck nur wenig zu ändern, da bei deutlich reduziertem Reifendruck, wie er an sich für das Befahren von weichem oder feuchtem Ackerboden wünschenswert ist, die Traglast der Reifen reduziert ist, so dass das Fahrzeuggewicht nicht mehr abgestützt werden kann. Dies betrifft insbesondere die Fahrzeuge mit stark schwankendem Fahrzeuggewicht wie bspw. Hackfrucht-Vollerntemaschinen o. dgl.

Ketten- oder Gurtbandlaufwerke stellen eine mögliche Alternative für Radfahrwerke dar, da sich mit einem solchen Laufwerk die wirksame Aufstandsfläche deutlich erhöhen und meist auch eine verbesserte Zugkraftübertragung auf weichen und feuchten Böden realisieren lässt. Durch die zunehmende Forderung, den Boden und insbesondere die landwirtschaftlich genutzten Ackerböden vor zu hohen Gewichtsbelastungen durch Maschinen und Fahrzeuge zu schützen, werden zunehmend Fahrzeuge eingesetzt, die anstelle von Antriebs- und Stützrädern mit Luftbereifung geeignete Gurtbandlaufwerke aufweisen, da diese gegenüber den Aufstandsflächen von Gummirädern eine größere Aufstandsfläche bieten und zudem eine verbesserte Zugkraft auf weichem Boden versprechen. Dabei werden in der Praxis ausschließlich Laufwerke eingesetzt, bei denen entweder alle Trag- und Umlenkrollen starr an einem Laufwerkswagen montiert sind oder maximal einzelne kleine Tragrollen gefedert angelenkt sind. Der Grund dafür ist, dass die bekannten Gurtbahnlaufwerke sehr hohe Vorspannkräfte der Gurte benötigen, um ausreichend hohe Lasten zwischen den Tragrollen aufnehmen zu können. Daher wiesen die Gurtbandlaufwerke bisher meist starr gelagerte Umlenkrollen auf.

Diese starr gelagerten Umlenkrolle haben den typischen Nachteil eines nur sehr eingeschränkten Fahr- und Abrollkomforts gegenüber einem Räderfahrwerk, insbesondere bei Straßenfahrt. Ein weiterer und schwerwiegenderer Nachteil der bekannten Laufwerke ist dabei, dass die auftretenden Aufstandslasten nicht gleichmäßig auf alle Trag- und Umlenkrollen verteilt werden können. Nur im Idealfall, bei absolut ebenen Bodenverhältnissen ist eine gleichmäßige Lastverteilung gegeben. Läuft jedoch eine Tragrolle auf eine Unebenheit auf, wird diese überlastet und andere entlastet, so dass wiederum hohe Belastungen für die Böden entstehen.

Ein Fahrwerk für landwirtschaftliche Maschinen mit elastischen Gurtbändern ist aus der US 54 09 075 A bekannt, bei dem die sich auf dem Boden abstützenden Laufrollen jeweils über eine pneumatische Federung verfügen. Die pneumatischen Federelemente sind druckseitig miteinander gekoppelt, um eine möglichst gleichmäßige Druckverteilung der Rollen- und Laufbandaufstandsflächen bei wechselnden Bodenverhältnissen und Bodenunebenheiten zu ermöglichen.

Ein weiteres Fahrwerk für landwirtschaftliche Maschinen mit elastischen Gurtbändern geht aus der DE 196 20 759 A1 hervor. Die Laufrollen des Fahrwerks sind jeweils an Schwingarmen aufgehängt, die über hydraulische Stellorgane am Rahmen abgestützt sind. Die hydraulischen Stellorgane sind wirkungsmäßig miteinander gekoppelt, um eine Federwirkung zu erzielen und um bei unterschiedlichen Bodenverhältnissen und Bodenunebenheiten gleichbleibende Bodendrücke der Laufrollen gewährleisten zu können.

Die EP 1 248 721 A1 beschreibt ein Gurtbandlaufwerk für eine landwirtschaftliche Zugmaschine, das durch eine gefederte Aufhängung der Laufrollen und Laufrollenrahmen eine Anpassung an wechselnde Bodenverhältnisse sowie an Bodenunebenheiten ermöglichen soll. Die Aufhängung umfasst mehrere Luftfedersysteme, über die jeweils die vorderen und hinteren Laufkettenrahmen bzw. die einzelnen Laufrollen abgestützt sind.

In der WO 93/19975 A1 wird ein Raupenlaufwerk mit den im Oberbegriff des Anspruchs 1 definierten Merkmalen beschrieben. Er weist einen Längsträgerauf, der durch eine Luftfeder am Fahrzeugrahmen abgestützt ist. Der Längsträger stützt vordere und hintere Umlenkräder für ein Raupenband ab. Weitere Laufräder sind durch Luftfedern am Längsträger abgestützt, wobei die Luftfeder des vordersten Laufrads permanent mit der zwischen dem Fahrzeugrahmen und dem Längsträger angeordneten Luftfeder verbunden ist. Die übrigen Luftfedern sind durch Stellungsregler mit einem Luftbehälter verbunden und können in eine abgesenkte Stellung verbracht werden, um die Aufstandsfläche zu vermindern.

Die DE 199 19 959 A1 beschreibt ein Raupenlaufwerk mit einem die Umlenkräder des Gurtbandes und ein Stützrad abstützenden Tragrahmen, der durch eine Schwinge am Rahmen eines Mähdreschers angelenkt ist. Die Höhe des Tragrahmens ist durch eine zwischen ihm und der Schwinge angelenkten Hydraulikzylinder verstellbar. Ein Druckspeicher kann mit dem Hydraulikzylinder verbunden werden.

Die bekannten Federsysteme für Gurtbandoder Kettenlaufwerke ermöglichen durch die elastisch aufgehängten Laufrollen zwar eine verbesserte Druckverteilung der wirksamen Fahrwerksaufstandsflächen zwischen den äußeren Umlenkrollen bei unebenem Untergrund, ermöglichen jedoch keine gleichmäßige Druckverteilung über die gesamte Länge des Laufwerks, so dass auch bei den bekannten Fahrwerken teilweise sehr hohe Druckspitzen in den Ackerboden eingeleitet werden.

### Aufgabenstellung

Ein vorrangiges Ziel der vorliegenden Erfindung besteht darin, die vorgenannten Nachteile zu vermeiden und ein Gurtbandlaufwerk zur Verfügung zu stellen, das eine gleichmäßigere Bodenbelastung ermöglicht und zudem einen erhöhten Fahr- und Abrollkomfort bietet.

### Lösung

Ein gefedertes, auflagekraftoptimiertes Gurtbandlaufwerk für Landfahrzeuge mit den Merkmalen des unabhängigen Anspruchs 1 umfasst mindestens zwei äußere Umlenkrollen, über deren Umfang ein Endlos-Gurtband abrollt, sowie zwei oder mehr Stützrollen zur Abstützung des bodenseitigen Gurtbandabschnittes zwischen den beiden Umlenkrollen. Die beiden Umlenkrollen sind drehbar in einem Laufwagen gelagert, der gegen einen Aufbaurahmen des Fahrzeuges mittels einer ersten fluidischen Federungs- und/oder Dämpfungseinheit abgestützt ist. Die Stützrollen sind am Laufwagen mittels einer zweiten fluidischen Federungs- und/oder Dämpfungseinheit abgestützt. Die Stützrollen sind über jeweils eine Schwingenlagerung am Laufwagen angebunden und daran mittels einer zweiten fluidischen Federungs- und/oder Dämpfungseinheit abgestützt. Der Laufwagen ist über eine Schwingenlagerung am Aufbaurahmen des Fahrzeugs abgestützt. Alle fluidischen Federungs- und/oder Dämpfungseinheiten umfassen jeweils mindestens eine hydraulische Lineareinheit in Form eines Stützzylinders, die druckseitig hydraulisch miteinander gekoppelt sind. Das Druckfluidsystem der Federungs- und/oder Dämpfungseinheiten umfasst einen zuschaltbaren hydropneumatischen Druckspeicher. Die fluidischen Federungs- und/oder Dämpfungseinheiten sind Teil eines hydropneumatischen Federungs- und Dämpfungssystems, bei dem die relativ langsamen Umströmzeiten einer Hydraulikflüssigkeit zur Schwingungsdämpfung genutzt werden, und bei dem das schnelle Ansprechverhalten und die Kompressibilität eines geeigneten Druckgases zur Realisierung eines gewünschten Federungsverhaltens eingesetzt wird.

Wenn im vorliegenden Zusammenhang meist von einem Endlos-Gurtband die Rede ist, so kann damit bspw. ein elastisches Gurtband aus einem geeigneten Material insbesondere ein Elastomermaterial mit oder ohne verstärkende Gewebeoder Drahteinlagen gemeint sein. Als Gurtband im Sinn der Erfindung kommt jedoch auch eine Laufkette o. dgl. in Frage, die wahlweise mit dämpfenden Auflagen versehen sein kann.

Das erfindungsgemäße Gurtbandlaufwerk weist wenigstens zwei Tragrollen bzw. Umlenkrollen des Laufwerks auf, die drehbar über Schwingen oder eine geeignete anderweitige Lagerung am Laufwerkswagen gelagert sind. Selbstverständlich können auch mehr als zwei Umlenkrollen vorgesehen sein, wenn dies sinnvoll ist und wenn der entsprechende Einbauraum zur Verfügung steht. Vorzugsweise wird über die erwähnten fluidischen Einheiten bzw. geeignete Stützzylinder der entsprechende Lastanteil auf die einzelnen Tragrollen aufgebracht. Die Trag- und Umlenkrollen, über welche das Endlos-Gurtband gespannt ist, sind vorzugsweise starr mit dem Laufwerkswagen verbunden bzw. haben eine Gurtspannvorrichtung integriert.

Das Gurtbandlaufwerk weist zwei oder mehr Stützrollen gleicher oder unterschiedlicher Größe auf, die jeweils zur Abstützung des bodenseitigen Gurtbandabschnitts zwischen den beiden Umlenkrollen angeordnet sind. Je nach erforderlicher Länge des tragenden Abschnitts des Gurtbandes können nahezu beliebig viele Stützrollen zwischen den beiden äußeren Trag- bzw. Umlenkrollen angeordnet sein, die vorzugsweise einzeln oder auch paarweise oder gruppenweise mittels zweiter Fluidelemente gegen den Laufwagen abgestützt sind.

Um eine weitgehend gleichmäßige Lastverteilung auf alle Trag- und Umlenkrollen zu realisieren, wird die abzustützende Achslast eines Fahrzeugs zunächst in eine mit dem Laufwagen drehbar verbundene Schwinge eingeleitet. Diese Schwinge wird dann wiederum gegen den Laufwagen mittels eines oder entsprechend konstruktiver Gestaltung mehrerer Stützzylinder gegen Verdrehen abgestützt. In dem oder den Stützzylindern, die Hydraulikzylinder sind, baut sich entsprechend der aufgebrachten Achslast ein davon abhängiger Systemdruck auf.

Dieser Systemdruck wird dazu genutzt, die Stützzylinder der Tragrollen damit zu beaufschlagen und unter Berücksichtigung aller Hebel- und Zylinderflächenverhältnisse jede Tragrolle mit dem gleichen Achslastanteil zu beaufschlagen. Das heißt bspw. bei einem Laufwerk mit insgesamt fünf Trag- und Umlenkrollen, dass die insgesamt drei Tragrollen über jeweils eine Schwinge drehbar und mittels Stützzylinder abgestützt am Laufwagen montiert sind. Die Wirkflächen der Stützzylinder für die Schwinge zur Achslastaufnahme und die der drei Stützzylinder für die drehbar gelagerten Tragrollen sind dann unter Berücksichtigung der Hebelverhältnisse an den Schwingen so abzustimmen, dass sich bei gleichem Systemdruck in allen Zylindern die aufgebrachte Achslast zu je einem Fünftel auf die Tragrollen abstützen kann. Damit ist der Vorteil einer gleichmäßigen Bodenbelastung über die gesamte Aufstandsfläche eines Gurtbandlaufwerkes gewährleistet.

Dem System der sich gegenseitig stützenden Zylinder kann ein hydropneumatischer Druckspeicher zugeschaltet werden. Damit wird in vorteilhafter Weise auch eine federnde Wirkung erzielt und ein entsprechendes Gurtbandlaufwerk vom dazugehörigen Fahrzeugrahmen entkoppelt, so dass höchster Fahr- und Abrollkomfort gegeben ist.

Das Gurtbandlaufwerk kann bspw. ein sog. Dreieckslaufwerk sein, das ein mittiges oder seitlich versetztes, oben liegendes Antriebsrad aufweist. Ein solches Dreieckslaufwerk ist besonders gut dafür geeignet, an bereits vorhandene Radaufhängungen angepasst zu werden, um aus einem Radfahrzeug ein Teilraupen- oder Vollraupenfahrzeug zu machen.

Eine bevorzugte Variante der Erfindung sieht zudem vor, dass die Stützrollen jeweils so aufgehängt bzw. gelagert sind, dass eine gewisse Verdrehung des vorzugsweise elastischen Gurtbandes ermöglicht ist. Dies kann durch eine geeignete Verschwenkbarkeit der Drehachsen der Stützrollen um eine reale oder virtuelle Schwenkachse ermöglicht sein, die in etwa parallel zur Längsrichtung des Fahrzeuges orientiert ist. Bei einem ausreichend elastischen Gurtband kann auf diese Weise verhindert werden, dass sich dieses bei stark unebenem Boden mit nur einer tragenden Kante in den Boden eingräbt. Der Schwenkwinkel der Stützrollen kann ggf. begrenzt sein, um ein Ablaufen des Gurtbandes zuverlässig zu verhindern.

Wahlweise kann diese Verschwenkbarkeit der einzelnen Stützrollen auch aktiv beeinflussbar sein, wodurch in bestimmten Fahrsituationen eine verbesserte Traktion erreicht werden kann. So kann es bspw. bei einer Fahrt entlang einer Hangneigung sinnvoll sein, die Kanten des Gurtbandes leicht in den Hang einzudrücken, um ein gewisses Verkanten des Gurtbandes mit dem Untergrund zu erzeugen und um damit ein Abrutschen bzw. ein Abtriften des Fahrzeuges zu verhindern. Dieses Verkanten des Gurtbandes kann einerseits durch die erwähnte Verschwenkung einzelner oder aller Tragrollen, durch deren verstärkte Druckbeaufschlagung (siehe Erläuterung weiter unten) oder auch durch eine Kombination beider Steuerungseingriffe unterstützt werden.

Darüber hinaus kann es auch sinnvoll sein, den Laufwagen bzw. die zwei, drei, vier oder mehr Laufwagen selbst kardanisch oder auf andere geeignete Weise aufzuhängen, um einen Hangausgleich für den Fahrzeugaufbau zu ermöglichen. Dieser Hangausgleich kann wahlweise mittels Neigungssensoren und zugehöriger Regelschaltung oder auf manuelle Weise durch den Fahrer erfolgen.

Zur Aufnahme aller auftretenden Kräfte an einem Gurtbandlaufwerk muss die zur Aufnahme und Einleitung in den Laufwagen bestimmte Schwinge mit einer bestimmten Breite und zur Aufnahme vorzugebender Wege bestimmte Hebellängen aufweisen. Damit werden dann unter Umständen die gegebenen Platzverhältnisse innerhalb eines Laufwerkes überschritten. Bei einer erfindungsgemäßen Gestaltung wird dann die Schwinge um ein erforderliches Maß seitlich versetzt angebracht, vorzugsweise Richtung Fahrzeugmitte. Die Funktionsweise des Gesamtsystems wird dadurch jedoch nicht beeinflusst.

Durch eine weitere erfindungsgemäße Ausgestaltung des Hydrauliksystems können unterschiedliche Betriebszustände für ein Gurtbandlaufwerk realisiert werden. So wird das Laufwerk bei Straßenfahrt vorzugsweise mit einer Federwirkung betrieben, bei dem der Druckspeicher zugeschaltet ist. Da bei sich ändernder Achslast auch der Systemdruck steigen oder fallen muss, kann es sinnvoll sein, bspw. den Weg der Schwinge zur Achslastaufnahme zu erfassen und das Fluidvolumen im System danach durch eine entsprechende Druck- und Speisequelle nachführen zu lassen. Dies entspricht praktisch einer Niveauregulierung wie sie schon vielfach realisiert ist und daher keiner weiteren Beschreibung bedarf.

Eine erfindungsgemäße Variante kann eine amplitudenabhängige Variation der Federrate vorsehen. Hierbei können bspw. zwei oder mehr Druckspeicher vorgesehen sein, die je nach Belastungs- bzw. Beladungszustand des Fahrzeugs zu- oder abgeschaltet werden. So kann bspw. eine Amplitude der Laufwerksschwinge erfasst werden. Bei stärkerer Fahrzeugbeladung und bei größeren Unebenheiten und bei höherer Fahrgeschwindigkeit nimmt die Schwingamplitude normalerweise zu. Dem kann durch Versteifung des Druckfluidsystems begegnet werden, insbesondere durch Abkoppelung eines von mehreren Druckspeichern. Eine feinere Regulierung kann durch variable Abschaltung von einem, zwei oder mehr Druckspeichern vom Druckfluidsystem erfolgen, so dass eine variable Federrate erzielbar ist, die den unterschiedlichen Fahr- und Betriebszuständen angepasst werden kann. Die genannten Variationen können wahlweise auch während der Fahrt, insbesondere mittels einer geeigneten Regelschaltung, vorgenommen werden.

Wird eine Abschaltung der Federung gewünscht, ist dies einfach möglich, indem der Druckspeicher abgeschaltet bzw. vom übrigen Hydrauliksystem getrennt wird. Dies kann bspw. der Fall sein, wenn eine Erntemaschine mit automatischer Tiefenführung eines Emtevorsatzes ausgestattet ist und das Regelverhalten durch eine Federung negativ beeinflusst werden könnte. In diesem Betriebszustand ist auch in der Regel kein Nachführen des Systemvolumens erforderlich, da im dann geschlossenen System zwischen Stützzylinder der Achsschwinge und Stützzylinder der Tragrollen keine Volumenveränderung bei wechselndem Systemdruck auftritt. Die Summe der Volumina bleibt konstant.

Ein weiterer Vorteil wird erfindungsgemäß dadurch erreicht, dass eine Entkoppelung der Stützzylinder erfolgt und die drehbar gelagerten Tragrollen bewusst durch eine Druckquelle beaufschlagt werden, so dass diese Tragrollen entsprechend be- oder entlastet sind. So kann es an einem Seitenhang bspw. von Vorteil sein, die Aufstandsfläche des Laufwerks zu verkürzen, indem die mittleren Tragrollen höher belastet werden als die vordere und hindere Tragrolle, so dass ein seitliches Abrutschen am Hang weitgehend verhindert werden kann. Auch diese Variante kann wiederum mit oder ohne Federung ausgestaltet sein.

Das erfindungsgemäße Gurtbandlaufwerk eignet sich insbesondere für selbstfahrende landwirtschaftliche Arbeitsmaschinen, für Forst- und Baumaschinen, aber auch für andere Nutz- und Transportfahrzeuge, die auf weichen, nachgiebigen und/oder unebenen Böden sowie in unwegsamem Gelände eingesetzt werden. Der Vorteil von Fahrzeugen mit herkömmlichen Radlaufwerken - ihre Flexibilität, ihre relativ gute Manövrierbarkeit und die relativ hohe Fahrgeschwindigkeit - kommt vorwiegend bei Straßenfahrt oder beim Fahren auf befestigtem oder festem, trockenen Untergrund zum Tragen. Bei sehr hohen Fahrzeuggewichten dagegen stoßen Radlaufwerke an ihre Grenzen.

Die mit Gurtbandlaufwerken üblicherweise verbundenen Nachteile - Einleitung von relativ hohen Scherkräften in den Boden bei der Übertragung hoher Zugkräfte, relativ schlechte Manövrierbarkeit, geringe Fahrgeschwindigkeit, hoher Verschleiß der Gurtbänder und nicht zuletzt die Komforteinbußen und die verstärkte Neigung des Fahrzeuges zum Springen und zum Aufschaukeln - können mit der vorliegenden Erfindung weitestgehend vermieden werden, so dass das erfindungsgemäße Gurtbandlaufwerk einen vielfältigen Einsatz derartiger Laufwerke für die unterschiedlichsten Fahrzeugtypen und Anwendungen ermöglicht, was bei den bisher bekannten Systemen nicht der Fall war oder nur mit großem konstruktiven Aufwand erreichbar war.

Darüber hinaus ermöglicht das erfindungsgemäße Gurtbandlaufwerk einen sehr einfach realisierbaren, automatisch regelbaren oder manuell einstellbaren Hangausgleich, da bei Bergauf- oder -abfahrt durch entsprechende Druckbeaufschlagung der Laufwerkstützzylinder eine gewisse Neigung ausgleichbar ist. Bei einer zusätzlichen kardanischen oder anderen geeigneten Aufhängung der Laufwerkswagen - vorzugsweise auf der linken und rechten Seite jeweils unabhängig voneinander - kann zudem ein Schräghangausgleich des Fahrzeugaufbaus erreicht werden, was einerseits zu einem verbesserten Fahrkomfort und zum anderen zu einer erhöhten Kippsicherheit und einer verbesserten Traktion führt.

Die Erfindung betrifft weiterhin ein Fahrwerk, das mit mindestens zwei Gurtbandlaufwerken gemäß einer der zuvor beschriebenen Ausführungsformen ausgestattet ist. Ein mit einem solchen Fahrwerk versehenes Fahrzeug kann wahlweise zwei, drei, vier oder mehr derartiger Gurtbandlaufwerke aufweisen. So ist bspw. eine Anordnung mit zwei hinteren Gurtbandlaufwerken und einem oder zwei vorderen, lenkbaren, luftbereiften Rädern möglich. Selbstverständlich sind auch Spezialfahrzeuge denkbar, die nur ein hinteres, vorzugsweise mittig angeordnetes Gurtbandlaufwerk gemäß einer der zuvor beschriebenen Ausführungsformen und zwei vordere Räder aufweist. Auch Fahrwerke mit vier Gurtbandlaufwerken - davon zwei oder auch alle lenkbar - sind möglich. Zahlreiche Abwandlungen und Varianten sind je nach gewünschtem Einsatzzweck des Fahrzeugs bzw. des Fahrwerks möglich.

### Beschreibung der Ausführungsbeispiele

Die Erfindung wird nachfolgend anhand eines bevorzugten Ausführungsbeispiels unter Bezugnahme auf die beiliegenden Zeichnungen näher erläutert. Das Beispiel dient zur Illustrierung der Erfindung, ist jedoch in keiner Weise einschränkend zu verstehen. Gleiche und gleichwirkende Teile sind in den Figuren mit gleichen Bezugsziffern bezeichnet; auf eine mehrfache Erläuterung wird teilweise verzichtet.
Fig. 1 zeigt eine schematische Darstellung einer Grundaufbaus einer Variante des erfindungsgemäßen Gurtbandlaufwerks.
Fig. 2 zeigt in schematischer Darstellung einen Ausschnitt des Grundaufbaus des Gurtbandlaufwerks gemäß Fig. 1.
Fig. 3 zeigt eine schematische Schnittansicht des Gurtbandlaufwerks.
Fig. 4 zeigt eine Seitenansicht einer weiteren Variante des Gurtbandlaufwerks.
Fig. 5 zeigt anhand eines schematischen Blockschaltbildes einen möglichen Aufbau des Leitungssystems zur Verbindung der Elemente des Gurtbandlaufwerks.
Fig. 6 zeigt eine schematische Perspektivdarstellung einer starren Fahrzeugachse, die mit zwei erfindungsgemäßen Gurtbandlaufwerken ausgerüstet ist.
Fig. 7 zeigt eine weitere Ausführungsvariante eines erfindungsgemäßen Gurtbandlaufwerks, das mit einer Doppelschwinge zur Lagerung eines symmetrisch aufgebauten Laufwagens ausgestattet ist.

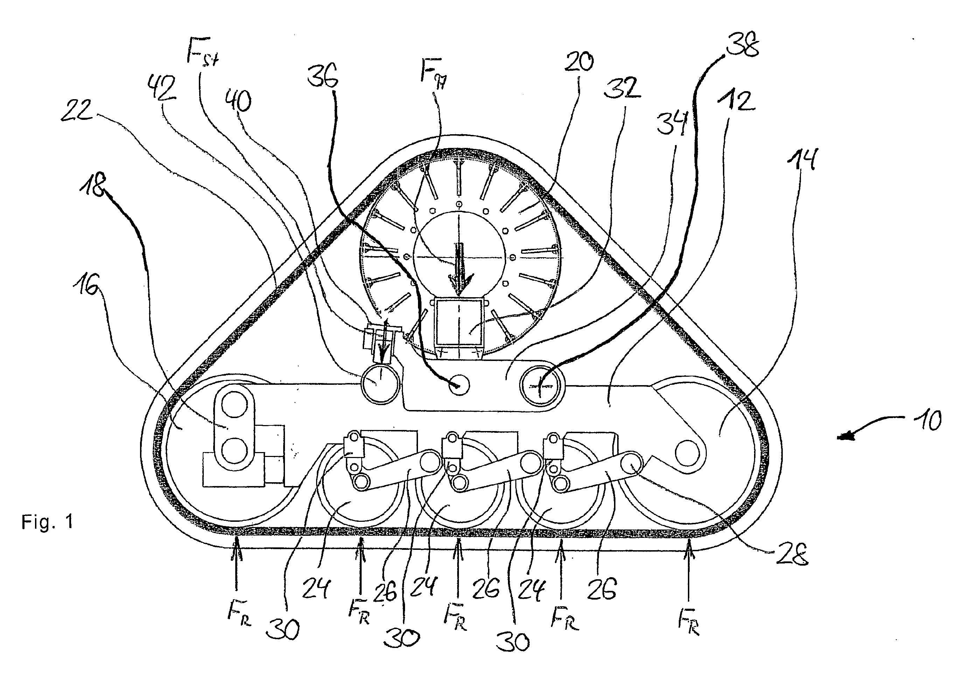

Fig. 1 zeigt in schematischer Darstellung einen Grundaufbau des Grundbandlaufwerkes 10 in einer ersten Variante, der hier in Form eines gleichschenkeligen Dreiecks gewählt wurde, da dies eine vorteilhafte Form hinsichtlich des Einbauraums in einem landwirtschaftlichen Fahrzeug (nicht dargestellt) ist.

Dargestellt ist in Seitenansicht der Laufwagen 12, an dem fest angebaut und drehbar gelagert die hintere Trag- und Umlenkrolle 14 sowie die vordere Trag- und Umlenkrolle 16 montiert sind. Im gezeigten Ausführungsbeispiel ist die vordere Trag- und Umlenkrolle 16 mit einer geeigneten Spannvorrichtung versehen - hier mit einem geeigneten Spannzylinder 18. Zwischen den beiden äußeren Rollen 14 und 16 und mit seiner Drehachse oberhalb dieser angeordnet liegt ein Antriebsrad 20, das entsprechend der gewählten Antriebsart, bspw. mechanisch oder auch hydrostatisch, auf dem Laufwagen 12 aufzubauen ist, hier aber nicht im Detail dargestellt wird.

Die Umschlingung von Antriebsrad 20, Trag- und Umlenkrolle vorn 16 und Trag- und Umlenkrolle hinten 14 durch das vorzugsweise elastische Gurtband 22 ergibt die Grundform des Gurtbandlaufwerks 10. Erkennbar sind weiterhin kleine Stützrollen bzw. Tragrollen 24, die jeweils an zugehörigen Schwingen 26 um Drehachsen 28 drehbar montiert und gelagert sind. Die Tragrollen 24 werden dann mittels jeweils ihnen zugeordneter Stützzylinder 30 und über die Schwingen 26 gegen den Laufwagen 12 abgestützt.

Weiterhin ist in Fig. 1 eine Tragachse 32 eines beliebigen Fahrzeugs erkennbar, welche die Achslast F_{A} in die Schwinge 34 des Laufwerks über eine Drehlagerung 36 einbringt, über welche die Laufwerksschwinge 34 gegen die Fahrwerkstragachse 32 abgestützt ist. Erkennbar ist auch, dass der Laufwagen 12 des Gurtbandlaufwerks 10 drehbar um die Drehachse 38 an der Schwinge 34 des Laufwerks gelagert ist. Weiterhin ist erkennbar, dass die Laufwerksschwinge 34 mittels des oder der Laufwerksstützzylinder 40 an einer Stützachse 42 gegen Verdrehung aufgrund der eingebrachten Achslast F_{A} abgestützt ist. Die Drehachse 38 der Laufwerksschwinge und die Stützachse 42 sind je nach Konstruktion entweder Bestandteil des Laufwagens 12 oder fest damit verbunden. So kann erfindungsgemäß die eingebrachte Achselast F_{A} durch die durch den Laufwerksstützzylinder 40 aufgebrachte Stützkraft F_{ST} und die Anbindung der Laufwerksschwinge 34 in den Laufwagen 12 übertragen werden.

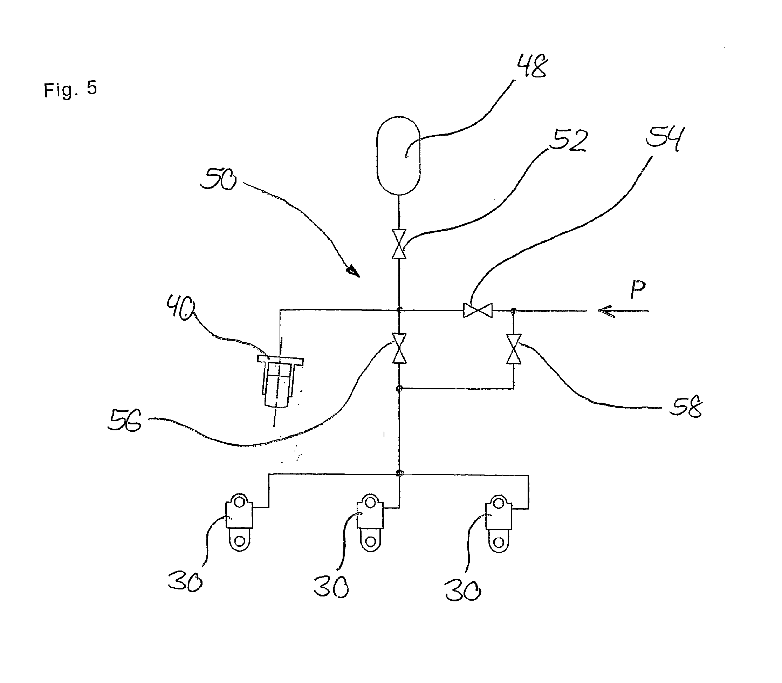

Erfindungsgemäß baut sich abhängig von der Achslast F_{A}, den Hebelverhältnissen und der gewählten Zylinderfläche im Laufwerksstützzylinder 40 ein Systemdruck zur Erreichung der Stützkraft F_{ST} auf das Laufwerk auf, der dann wiederum zur Beaufschlagung der Stützzylinder 30 für die Tragrollen 24 über ein hier nicht näher beschriebenes Rohr- und Schlauchleitungssystem, wie dies beispielhaft und schematisch in Fig. 5 dargestellt ist.

Sind alle Hebel- und Wirkflächenverhältnisse in diesem System entsprechend ausgelegt, verteilt sich die eingebrachte Achslast F_{A} gleichmäßig auf alle Tragrollen 24 sowie die vordere Trag- und Umlenkrolle 16 und die hintere Trag- und Umlenkrolle 14, woraus sich eine gleichmäßige Aufstandslast F_{R} der Trag- und Umlenkrollen 14, 16 und 24 ergibt.

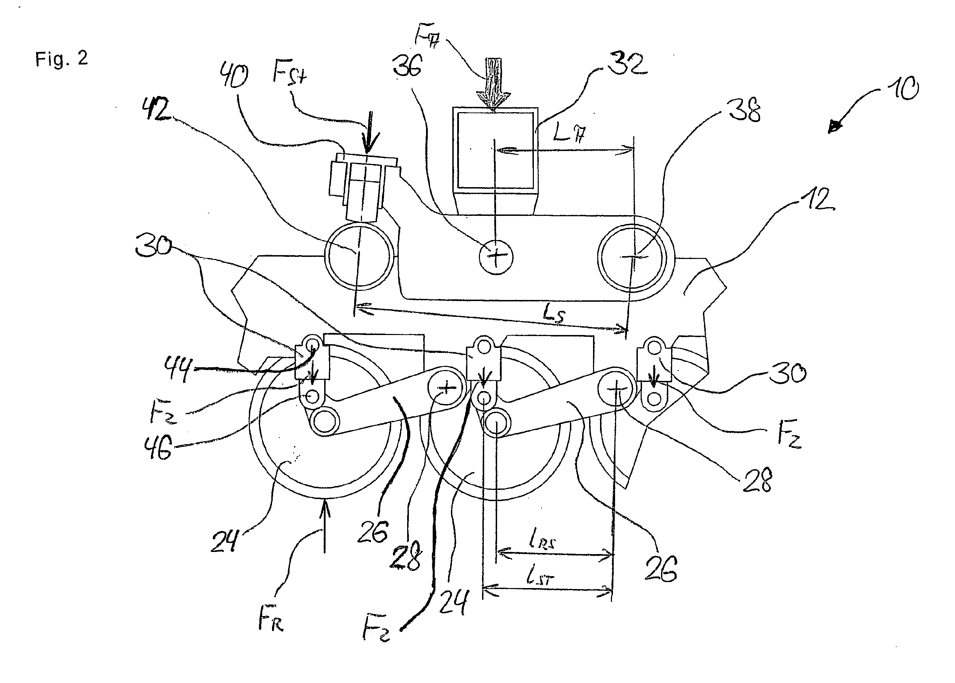

Fig. 2 zeigt in schematischer Darstellung einen Ausschnitt des Grundaufbaus eines Gurtbandlaufwerks 10 entsprechend Fig. 1. Anhand der Darstellung ist erkennbar, wie erfindungsgemäß die Achslast F_{A} über die Drehlagerung 36 der Tragachse in die Laufwerksschwinge 34 eingebracht wird. Weiterhin ist die Drehachse 38 der Laufwerksschwinge 34 drehbar am Laufwagen 12 gelagert. Der mit der Laufwerksschwinge 34 verbundene Stützzylinder 30 stützt sich an der Stützachse 42 des Laufwagens 12 ab und verhindert so ein Verdrehen der Laufwerksschwinge 34.

Dabei wird eine Stützkraft F_{ST} auf das Laufwerk erzeugt, die abhängig ist von der Hebellänge(Achslast) L_{A} und der Hebellänge(Stützlast) L_{S}, sowie der über die Fahrwerkstragachse 32 eingebrachten Achslast F_{A}. Der für die Stützkraft F_{ST} auf das Laufwerk erforderliche Systemdruck ergibt sich anhand der gewählten Zylinderdurchmesser für die oder den Laufwerksstützzylinder 40 und der sich daraus ergebenden Wirkfläche.

Erfindungsgemäß dargestellt sind auch die Anbindung der Tragrollen 24 über die Tragrollenschwingen 26 und die Drehachsen 28 der Schwingen an den Laufwagen 12, sowie die Abstützung der Tragrollenschwingen 26 gegen den Laufwagen 12 mittels der in den Drehachsen 44 am Laufwagen 12 und den Drehachsen 46 an der Schwinge 26 gelagerten Stützzylinder 30 für die Tragrolle 24.

Durch den im Laufwerksstützzylinder 40 aufgebauten und über ein entsprechendes, hier nicht dargestelltes Leitungssystem auf die Tragrollenstützzylinder 30 übertragenen Systemdruck erzeugen diese Stützzylinder 30 eine entsprechende Stützkraft F_{Z} auf die jeweilige Tragrolle 24, so dass unter Berücksichtung der Hebellänge I_{RS} der Tragrollenschwinge und der Hebellänge I_{ST} zwischen Drehachse 28 und Stützzylinder 30 eine für alle Trag- und Umlenkrollen gleicher Aufstandslast F_{R} der Trag- und Umlenkrollen erzeugt wird.

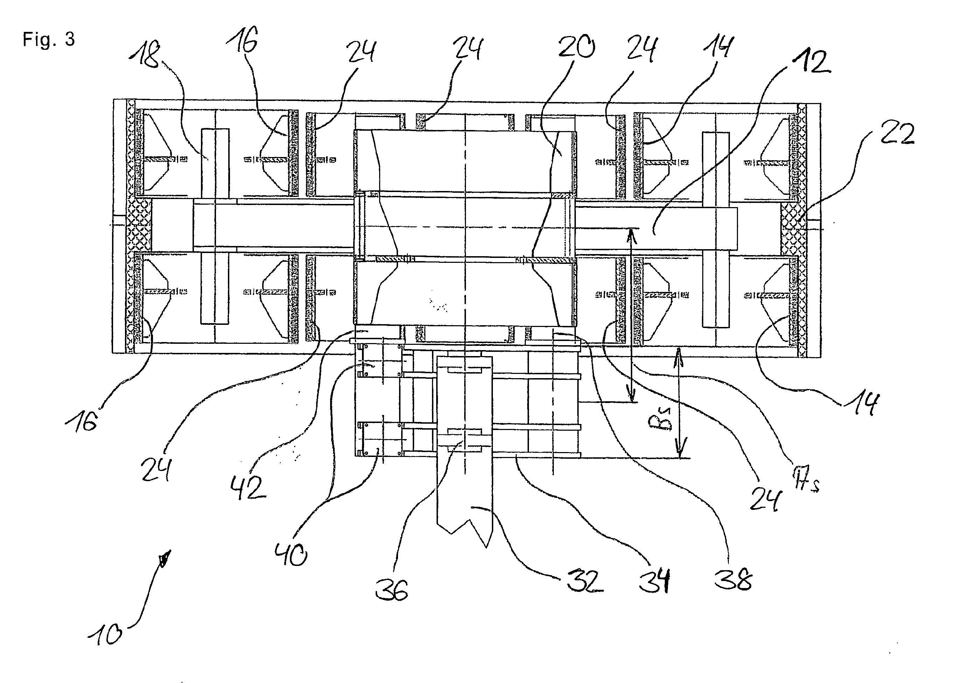

Die schematische Darstellung der Fig. 3 zeigt einen Schnitt durch das Gurtbandlaufwerk 10 in der Draufsicht, so dass erkennbar wird, dass bspw. bei dem in der Fig. 1 gezeigten Ausführungsbeispiel die Laufwerksschwinge 34 zur Aufnahme aller einwirkenden Kräfte über eine breite Schwinge B_{S} verfügt. Aufgrund der Anordnung des Antriebsrades 20 ist es in diesem Fall erforderlich, die Laufwerksschwinge 34 dann um einen Abstand A_{S} zwischen Schwinge und Mittellaufwerk zu versetzen, sinnvollerweise hin zu einer Fahrzeugmitte. Die Verbindung zum Laufwagen 12 hin erfolgt durch die entsprechend gestaltete Drehachse 38 des Schwingenlaufwerks und die Stützachse 42 des Laufwagens 12. Durch die breite Schwinge B_{S} ist es auch möglich, mehrere Laufwerksstützzylinder 40 entsprechend der Fig. 3 anzubringen, im dargestellten Ausführungsbeispiel zwei Stützzylinder.

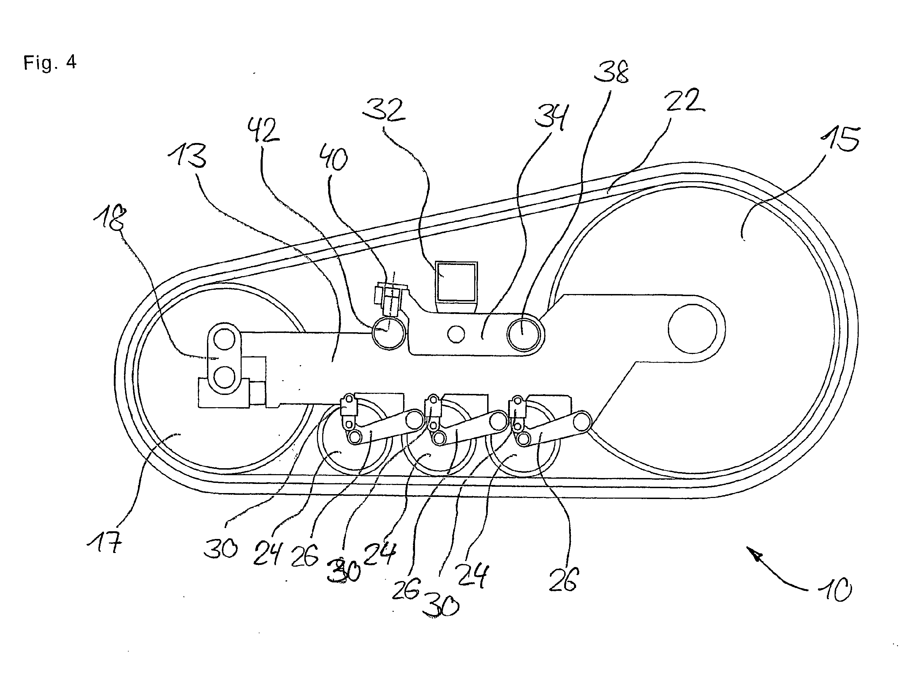

Die schematische Darstellung der Fig. 4 zeigt weiterhin eine Seitenansicht des gefederten und auflagekraftoptimierten Gurtbandlaufwerks 10 in einer alternativen Ausführungsform, nämlich in einer sog. Keilform. Hier ist dargestellt, dass durch eine im Durchmesser kleinere vordere Trag. und Umlenkrolle 17 und eine größere hintere Trag- und Umlenkrolle 15, die bspw. auch gleichzeitig als Antriebsrolle dienen kann, ein Gurtbandverlauf darstellbar ist, der bei ebenfalls den Erfordernissen angepasstem Laufwagen 13 den Einbau der Laufwerksschwinge 34 mittig darüber zulässt, so dass es keinen Abstand A_{S} zwischen Schwinge und der Mitte des Laufwerks (vgl. Fig. 3) gibt, bzw. dass dieser gleich null wird.

Die übrigen Elemente des in Fig. 4 gezeigten Ausführungsbeispiels entsprechen den bereits anhand der Figuren 1 bis 3 beschriebenen Komponenten und werden daher nicht nochmals erläutert.

Die schematische Darstellung der Fig. 5 zeigt anhand eines schematischen Blockschaltbildes den grundsätzlichen Aufbau eines möglichen Leitungssystems zur Verbindung aller fluidischen bzw. hydraulischen Elemente und damit der möglichen Betriebszustände des erfindungsgemäßen Gurtbandlaufwerks. Ersichtlich ist, wie zunächst erfindungsgemäß die oder der Laufwerksstützzylinder 40, die Tragrollenstützzylinder 30, ein Drucksspeicher 48 und eine Druckquelle P durch ein Rohr- und Schlauchleitungssystem 50 miteinander verbunden sind. In das Rohr- und Schlauchleitungssystem 50 sind - wie hier schematisch dargestellt - die Ventile 52, 54, 56 und 58 integriert.

Bei den auftretenden hohen Lasten von landwirtschaftlichen Maschinen wird es sich bei diesem System vorzugsweise um Hydrauliksysteme handeln. Das Drucksystem kann jedoch auch ein Gas bzw. Luft als Druckmedium aufweise. Entsprechend einem Ausführungsbeispiel der Erfindung sind folgende Betriebszustände des Gurtbandlaufwerks 10 möglich. Sind zunächst nur die Stützzylinder 30 und 40 sowie der Druckspeicher 48 miteinander verbunden, d.h. Ventile 52 und 56 geöffnet, Ventile 54 und 58 geschlossen, wird eine Achslast gleichmäßig auf die Tragrollen verteilt und mit Hilfe eines hydropneumatisch ausgebildeten Druckspeichers 48 gleichzeitig eine aktive Federung des Gesamtsystems erreicht. Bei gleichbleibender Achslast muss die Druckquelle P nicht zwangsläufig mitverbunden bzw. angeschlossen sein, da im geschlossenen System ein annähernd gleich bleibender Systemdruck herrscht. Ändert sich jedoch die Achslast, z.B. durch zunehmende Beladung einer Erntemaschine, steigt der Systemdruck und Fluidvolumen wird bei aktiver Federung in den Druckspeicher 48 verdrängt. Dann ist es sinnvoll, über die Druckquelle P (Ventil 54 offen) Volumen nachzuführen. Dies kann regelungstechnisch über die Erfassung des Einfederungswegs der Laufwerksschwinge 34 erfolgen.

Eine weitere Beschreibung dazu ist nicht erforderlich, da dies aus dem Stand der Technik bekannt ist und praktisch eine Art einer Niveauregulierung darstellt.

Ist dagegen keine aktive Federung des Gesamtsystems gewünscht, kann durch Abschalten des Druckspeichers 48 (Ventil 52 geschlossen) die aktive Federung abgeschaltet werden. Es wird dann nur ein Fluidvolumen zwischen den Stützzylindern 40 und 30 entsprechend der Tragrollenbewegung ausgetauscht, bei einem durch die Achslast bestimmten Systemdruck. Die gleichmäßige Verteilung der Achslast bleibt somit unberührt.

Erfordern bestimmte Fahrzustände bzw. Fahrsituationen eine Be- oder Entlastung der mittigen Tragrollen 24, kann dies erfolgen, indem eine Trennung des Laufwerksstützzylinders 40 von den Tragrollenstützzylindern 30 erfolgt. Hierbei sind die Ventile 56 und 54 geschlossen und das Ventil 58 geöffnet. Damit kann über die Druckquelle P die Belastung der Tragrollen 24 gesteuert werden. So kann bspw. an einem seitlich abgeschrägtem Untergrund (Seitenhang) eine erhöhte Belastung der hangabwärts befindlichen Tragrollen erfolgen, so dass die Aufstandsfläche des Laufwerks verkürzt wird, was gegen seitliches Abrutschen bzw. Abtriften von Vorteil sein kann. Gleichzeitig kann dabei noch der Druckspeicher 48 dem Laufwerksstützzylinder 40 durch Öffnen oder Schließen des Ventils 52 hinzu- oder weggeschaltet werden, was wiederum einen Betriebszustand mit oder ohne aktiver Federung entspricht.

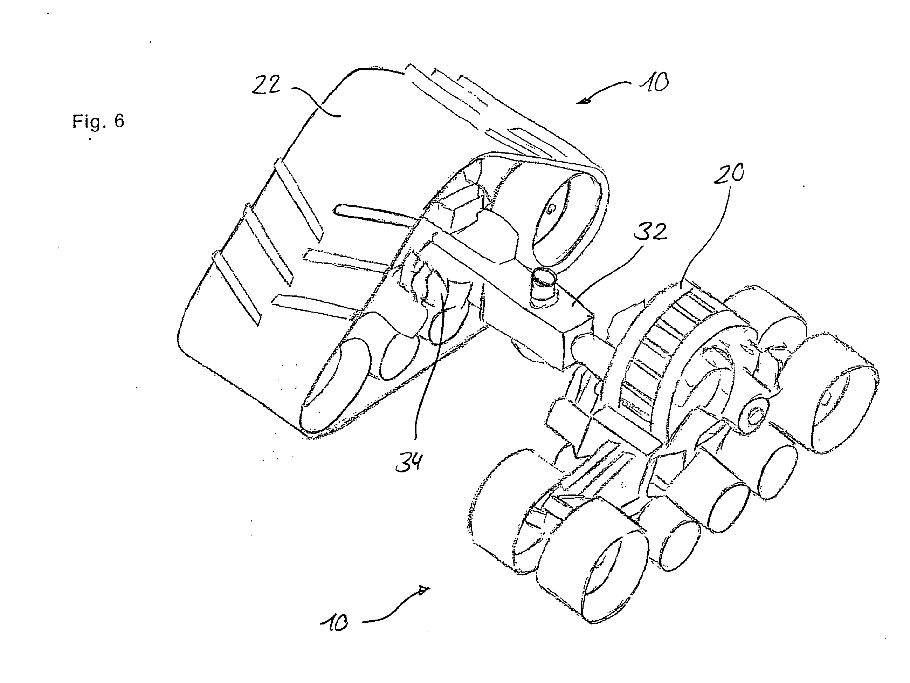

Die schematische Perspektivdarstellung der Fig. 6 illustriert eine starre Fahrzeugachse 32, die mit zwei erfindungsgemäßen Gurtbandlaufwerken 10 entsprechend der in den Figuren 1 bis 3 gezeigten Ausführungsvariante ausgerüstet ist. Es ist erkennbar, dass anstelle herkömmlicher Räder mit Luftbereifung nun die Antriebsräder 20 der jeweiligen linken und rechten Gurtbandlaufwerke 10 mit den Naben der starren Tragachse 32 des Fahrzeugs verbunden sind. Die erfindungsgemäßen Gurtbandlaufwerke 10 sind somit zur universellen Nachrüstung vorhandener Radfahrwerke grundsätzlich geeignet.

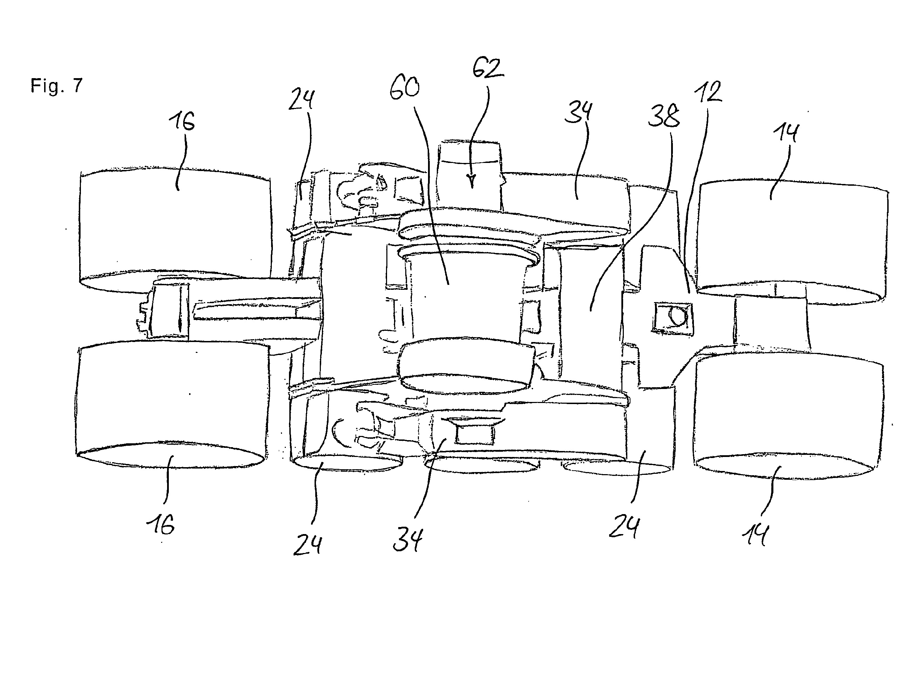

Die Fig. 7 zeigt schließlich eine weitere Ausführungsvariante eines erfindungsgemäßen Gurtbandlaufwerks 10, das mit einer Doppelschwinge zur Lagerung eines symmetrisch aufgebauten Laufwagens 12 ausgestattet ist. Die beiden gleich aufgebauten und weitgehend symmetrisch angeordneten Laufwerksschwingen 34 sind über den gemeinsamen Bolzen der Drehachse 38 gekoppelt. Die beiden Schwingen 34 umschließen im gezeigten Ausführungsbeispiel einen hydrostatischen Radnabenmotor 60, der über einen Verbindungsanschluss 62 mit einem hydrostatischen Antriebssystem des Fahrzeugs (nicht dargestellt) gekoppelt ist. Alternativ hierzu kann der Antrieb auch bspw. über ein schaltbares Planetengetriebe oder auf andere, ggf. herkömmliche mechanische, Weise erfolgen.

Bei der Variante gemäß Fig. 7 sind die Trag- und Umlenkrollen 14 und 16 sowie die Tragrollen 24 jeweils mittig geteilt und mittig angeordneten, relativ schmal ausgeführten Laufwagen 12 gelagert.

Das Ausführungsbeispiel zeigt ein gefedertes, auflagekraftoptimiertes Gurtbandlaufwerk 10, insbesondere für selbstfahrende Landmaschinen und sonstige Off-Road-Fahrzeuge, bei dem alle kleinen Tragrollen 24 über eine Schwinge 26 drehbar über die Tragrollenschwingendrehachsen 28 am Laufwagen 12 angebunden sind. Weiter kennzeichnend ist, dass jede Tragrollenschwinge 26 und damit die kleinen Tragrollen 24 mittels eines Tragrollenstützzylinders 30 an jeder Tragrollenschwinge 26 zum Laufwagen 12 hin abgestützt ist. Dabei sind die Tragrollenstützzylinder 30 jeweils laufwagenseitig in den Drehachsen 44 der Tragrollenstützzylinder am Laufwagen und in den Tragrollenschwingen 26 in der Drehachse 46 gelagert. Mit kennzeichnend ist weiterhin, dass jeweils die erste vordere Umlenk- und Tragrolle 16 sowie die letzte hintere Umlenk- und Tragrolle 14 fest bzw. über eine Spannvorrichtung mit Spannzylinder 18 mit dem Laufwagen 12 verbunden sind. Die Anzahl x der kleinen Tragrollen 24 ist entsprechend den Gegebenheiten festzulegen und ist bei einer Gesamtzahl n Aufstandsrollen immer x = n - 2. Als weiteres Merkmal zeichnet das Laufwerk 10 aus, dass eine Achslast F_{A} durch die Fahrwerkstragachse 32 über die zur Bodenanpassung erforderliche Drehlagerung 15 der Fahrwerkstragachse zunächst in die Laufwerksschwinge 34 eingebracht wird. Die Laufwerksschwinge 34 ist wiederum drehbar an der Drehachse 38 der Laufwerksschwinge gelagert und stützt sich gegenüber liegend mittels eines oder mehrerer Laufwerksstützzylinder 40 an der Laufwerksstützylinder-Stützachse 42 ab.

Da die Drehachse 38 der Laufwerksschwinge und die Stützachse 42 des Laufwerksstützzylinders Bestandteil des Laufwagens 12 sind oder je nach technischer Lösung fest damit verbunden sind, wird die in die Laufwerksschwinge 34 eingebrachte Achslast F_{A} in den Laufwagen 12 weiter geleitet. Kennzeichnend dabei ist, dass die oder der Laufwerksstützzylinder 40 entsprechend den Hebelverhältnissen der Hebellänge Achlast (L_{A}) zur Hebellänge Stützlast (L_{ST}) eine Stützkraft F_{ST} auf das Laufwerk in Abhängigkeit von der Achslast F_{A} aufbaut. Hierbei gilt F_{ST} = F_{A} x L_{A} / L_{ST}.

Weiterhin ist mit kennzeichnend, dass dann zur Erreichung einer Vergleichmäßigung der Aufstandskraft F_{R} der Trag- und Umlenkrollen die oder der Laufwerksstützzylinder 40 mit allen Tragrollenstützzylindern 30 über ein Rohr- und Schlauchleitungssystem 50 miteinander verbunden sind. Da die Aufstandskraft F_{R} der Trag- und Umlenkrollen idealer Weise der n-te Teil der Achslast F_{A} bei einer Anzahl von n Tragrollen ist, sind die Wirkflächen der Laufwerksstützzylinder 40 mit denen der Tragrollenstützzylinder 30 so abzustimmen, dass sich bei einem Systemdruck P und unter Berücksichtigung der Hebellängen I_{RS} von Tragrollenschwinge und der Hebellänge I_{ST} der Tragrollenstützzylinder eine Stützkraft F_{z} auf die Tragrollen ergibt, die eine entsprechende Aufstandslast F_{R} der Trag- und Umlenkrollen bei F_{R} = F_{A} / n ergibt.

Mit kennzeichnendes Merkmal ist, dass durch die Einbindung des vorzugsweise hydropneumatischen Druckspeichers 48 eine federnde Wirkung des Gesamtsystems Gurtbandlaufwerk erreicht wird, indem die Laufwerksschwinge 34 und die oder der Laufwerksstützzylinder 40 entsprechende Schwingungen abfedern.

Teil des Ausführungsbeispiels ist weiterhin ein gefedertes, auflagekraftoptimiertes Gurtbandlaufwerk, das als Dreieckslaufwerk mit mittig, oben liegendem Antriebsrad 20 die Laufwerksschwinge 34 mit einer Schwingenbreite B_{S} aus Einbau-, sprich Platzgründen um einen Achsabstand A_{S} der Schwinge zur Mitte des Gurtbandes 22 versetzt angebracht ist. Die Laufwerksschwinge 34 nimmt zwar dann entsprechende Torsionskräfte auf, doch ist das Zusammenwirken der oben erwähnten Komponenten hierdurch nicht beeinträchtigt.

Bei Gurtbandlaufwerken mit entsprechendem Einbauraum aufgrund größerer Umlenkrollen 17 vorn und hinten 15 (vgl. Fig. 4) wird der Achsabstand A_{S} zur Schwinge sinnvoller Weise kleiner, ggf. sogar gleich Null gewählt.

Weiteres Teil des Ausführungsbeispiels ist ein gefedertes, auflagekraftoptimiertes Gurtbandlaufwerk, bei dem die Tragrollenstützzylinder 30, die oder der Laufwerksstützzylinder 40 und der Druckspeicher 48 über das Rohr- und Schlauchleitungssystem 50 sowie die Ventile 52, 54, 56 und 58 so miteinander verschaltet sind, dass folgende Betriebszustände möglich sind.

Kennzeichnend für einen Betriebszustand mit aktiver Federung ist, dass alle Elemente, sprich Tragrollenstützzylinder 30, Laufwerksstützzylinder 40 und Druckspeicher 48 miteinander in Verbindung stehen; der Systemdruck P stellt sich dann bei gefülltem System abhängig von der Achslast F_{A} entsprechend ein. Bei sich ändernden Achslasten F_{A} wird sinnvoller Weise ein Wegerfassungssystem in den Laufwerksstützzylinder 40 integriert bzw. diesem zugeordnet, damit der Systemdruck P und damit der Einfederweg entsprechend nachgeführt werden kann. Da diese Systeme aus dem Stand der Technik bereits bekannt sind, wird hierauf nicht näher eingegangen.

Kennzeichnend für einen Betriebszustand mit deaktivierter Federung ist, dass nur die oder der Laufwerksstützzylinder 40 mit den Tragrollenstützzylindern 30 in Verbindung steht, wobei die Ventile 52, 54 und 58 geschlossen sind. Im System zwischen Laufwerksstützzylinder 40 und Tragrollenstützzylindern 30 baut sich ein Systemdruck P abhängig von der Achslast F_{A} auf.

Ein weiterer kennzeichnender Betriebszustand herrscht, wenn die Ventile 54 und 56 geschlossen sind. Hierbei sind die Tragrollenstützzylinder 30 allein mit der Druckquelle und dem Systemdruck P verbunden. Eine Abhängigkeit des Schwingenwegs von der Achslast F_{A} ist damit nicht mehr gegeben. Allerdings kann eine gezielte Be- oder Entlastung der Tragrollen 24 realisiert werden, was in bestimmten Fahrsituationen sinnvoll sein kann. Dabei kann gleichzeitig noch der Druckspeicher 48 mittels des Ventils 52 mit dem Laufwerksstützzylinder 40 verschaltet oder von diesem getrennt werden, so dass wahlweise mit oder ohne Federung gefahren werden kann.

Selbstverständlich können für bestimmte Spezialanwendungen auch Regelungssysteme aufgebaut werden, bei denen die zuvor erwähnten verschiedenen Betriebszustände (Schaltzustände der Ventile etc.) für jedes einzelne Laufwerk 10 bzw. für jeden einzelnen Zylinder individuell geregelt werden können.

### Bezugszeichenliste

- 10: Gurtbandlaufwerk
- 12: Laufwagen
- 13: Laufwagen (Keilform)
- 14: hintere Trag- und Umlenkrolle
- 15: hintere Trag- und Umlenkrolle (Keilform)
- 16: vordere Trag- und Umlenkrolle
- 17: vordere Trag- und Umlenkrolle (Keilform)
- 18: Spannzylinder
- 20: Antriebsrad
- 22: Gurtband
- 24: Tragrolle
- 26: Schwinge
- 28: Drehachse
- 30: Stützzylinder
- 32: Fahrwerkstragachse
- 34: Laufwerksschwinge
- 36: Drehlagerung
- 38: Drehachse
- 40: Laufwerksstützzylinder
- 42: Stützachse
- 44: Drehachse
- 46: Drehachse
- 48: Druckspeicher
- 50: Rohr-/Schlauchleitungssystem
- 52: Ventil
- 54: Ventil
- 56: Ventil
- 58: Ventil
- 60: Radnabenmotor
- 62: Verbindungsanschluss

## Patentansprüche

1. Gefedertes, auflagekraftoptimiertes Gurtbandlaufwerk (10) für Landfahrzeuge, insbesondere für selbstfahrende Landmaschinen und andere Off-Road-Fahrzeuge, umfassend:
mindestens zwei äußere Umlenkrollen (14, 15, 16, 17), über deren Umfang ein Endlos-Gurtband (22) abrollt,
zwei oder mehr Stützrollen (24) gleicher oder unterschiedlicher Größe, die jeweils zur Abstützung des bodenseitigen Gurtbandabschnitts zwischen den beiden Umlenkrollen (14, 15, 16, 17) angeordnet sind,
und einen Laufwagen (12, 13), der gegen einen Aufbaurahmen des Fahrzeugs mittels einer ersten fluidischen Federungs- und/oder Dämpfungseinheit abgestützt ist und in dem die wenigstens zwei Umlenkrollen (14, 15, 16, 17) drehbar gelagert sind,
wobei die Stützrollen (24) über jeweils eine Schwingenlagerung am Laufwagen (12, 13) angebunden und daran mittels einer zweiten fluidischen Federungs- und/oder Dämpfungseinheit abgestützt sind
und eine fluidische Koppelung der ersten Federungs- und/oder Dämpfungseinheit und einer zweiten Federungs- und/oder Dämpfungseinheit vorhanden ist,
**dadurch gekennzeichnet, dass** der Laufwagen (12, 13) über eine Schwingenlagerung am Aufbaurahmen des Fahrzeugs abgestützt ist,
dass alle fluidischen Federungs- und/oder Dämpfungseinheiten jeweils mindestens eine hydraulische Lineareinheit in Form eines Stützzylinders (30, 40) umfassen, die druckseitig hydraulisch miteinander gekoppelt sind
und dass das Druckfluidsystem der Federungs- und/oder Dämpfungseinheiten einen zuschaltbaren hydropneumatischen Druckspeicher (48) umfasst.

2. Gurtbandlaufwerk (10) nach Anspruch 1, bei dem eine amplitudenabhängige Variation der Federrate vorgesehen ist.

3. Gurtbandlaufwerk (10) nach einem der voranstehenden Ansprüche, bei dem das Laufwerk (10) als Dreieckslaufwerk ausgebildet ist.

4. Gurtbandlaufwerk (10) nach Anspruch 3, bei dem das Dreieckslaufwerk ein mittiges, oben liegendes Antriebsrad (20) aufweist.

5. Gurtbandlaufwerk (10) nach einem der Ansprüche 1 oder 2, bei dem das Laufwerk (10) als keilförmiges Laufwerk ausgebildet ist.

6. Gurtbandlaufwerk (10) nach einem der voranstehenden Ansprüche, bei dem die Laufwerksschwinge (34) gegenüber dem Gurtband (22) seitlich versetzt angeordnet ist.

7. Gurtbandlaufwerk (10) nach einem der voranstehenden Ansprüche, bei dem der Systemdruck regelbar ist.

8. Gurtbandlaufwerk (10) nach einem der voranstehenden Ansprüche, bei dem mittels eines Wegsensors zumindest an der Schwinge (38) des Laufwagens (12,13) und einem entsprechend regelbaren Systemdruck eine Niveauregelung ermöglicht ist.

9. Fahrwerk für ein Landfahrzeug, insbesondere für eine selbstfahrende Landmaschine, landwirtschaftliche Arbeitsmaschine, Off-Road-Fahrzeug o. dgl., umfassend mindestens zwei Gurtbandlaufwerke (10) gemäß wenigstens einem der Ansprüche 1 bis 8, die an gegenüber liegenden Längsseiten des Fahrzeugs angeordnet sind.

10. Landfahrzeug, selbstfahrende landwirtschaftliche Arbeitsmaschine o. dgl., mit einem Fahrwerk gemäß Anspruch 9, das mindestens zwei Gurtbandlaufwerke (10) gemäß wenigstens einem der Ansprüche 1 bis 8 aufweist, die an gegenüber liegenden Längsseiten des Fahrzeugs angeordnet sind.

## Claims

1. Spring-suspended, bearing-force-optimized belt-band travelling gear (10) for land vehicles, in particular for self-propelled farm machines and other off-road vehicles, comprising:
at least two outer deflection pulleys (14, 15, 16, 17), over the periphery of which an endless belt band (22) rolls,
two or more supporting rollers (24) of identical or different size, said supporting rollers each being arranged to support the ground-side belt-band section between the two deflection pulleys (14, 15, 16, 17),
and a bogie truck (12, 13) which is supported against a body framework of the vehicle by means of a first fluidic suspension and/or damping unit and in which the at least two deflection pulleys (14, 15, 16, 17) are rotatably mounted,
wherein the supporting rollers (24) are connected via a respective oscillating crank bearing to the bogie truck (12, 13) and are supported thereon by means of a second fluidic suspension and/or damping unit,
and there is a fluidic coupling of the first suspension and/or damping unit and a second suspension and/or damping unit,
**characterized in that** the bogie truck (12, 13) is supported on the body framework of the vehicle via an oscillating crank bearing,
**in that** all of the fluidic suspension and/or damping units each comprise at least one hydraulic linear unit in the form of a supporting cylinder (30, 40), which supporting cylinders are coupled hydraulically to one another on the pressure side,
and **in that** the pressure fluid system of the suspension and/or damping units comprises a hydropneumatic pressure accumulator (48) which can be switched on.

2. Belt-band travelling gear (10) according to Claim 1, in which an amplitude-dependent variation of the spring rate is provided.

3. Belt-band travelling gear (10) according to one of the preceding claims, in which the travelling gear (10) is designed as a triangular travelling gear.

4. Belt-band travelling gear (10) according to Claim 3, in which the triangular travelling gear has a central driving wheel (20) located at the top.

5. Belt-band travelling gear (10) according to either of Claims 1 and 2, in which the travelling gear (10) is designed as a wedge-shaped travelling gear.

6. Belt-band travelling gear (10) according to one of the preceding claims, in which the travelling-gear oscillating crank (34) is offset laterally in relation to the belt band (22).

7. Belt-band travelling gear (10) according to one of the preceding claims, in which the system pressure can be controlled.

8. Belt-band travelling gear (10) according to one of the preceding claims, in which level control is made possible by means of a displacement sensor at least on the oscillating crank (38) of the bogie truck (12, 13) and a correspondingly controllable system pressure.

9. Travelling mechanism for a land vehicle, in particular for a self-propelled land machine, agricultural working machine, off-road vehicle or the like, comprising at least two belt-band travelling gears (10) according to at least one of Claims 1 to 8, arranged on opposite longitudinal sides of the vehicle.

10. Land vehicle, self-propelled agricultural working machine or the like, with a travelling mechanism according to Claim 9, which has at least two belt-band travelling gears (10) according to at least one of Claims 1 to 8, arranged on opposite longitudinal sides of the vehicle.

## Revendications

1. Mécanisme de roulement à courroie (10) à suspension, dont la force d'appui est optimisée, pour véhicules agricoles, notamment machines agricoles automotrices et autres véhicules tout-terrain, comprenant :
au moins deux poulies de renvoi extérieures (14, 15, 16, 17), sur la périphérie desquelles roule une courroie sans fin (22),
deux galets de support (24) ou plus de même taille ou de taille différente, qui sont disposés à chaque fois de manière à supporter la portion de la courroie du côté du sol entre les deux poulies de renvoi (14, 15, 16, 17),
et un chariot (12, 13), qui est supporté contre un châssis de carrosserie du véhicule au moyen d'une première unité de suspension et d'amortissement fluidique, et dans lequel sont montées à rotation les au moins deux poulies de renvoi (14, 15, 16, 17),
les galets de support (24) étant reliés au chariot (12, 13) par le biais d'un support sur palier oscillant respectif et étant supportés sur celui-ci au moyen d'une deuxième unité de suspension et/ou d'amortissement fluidique,
et un accouplement fluidique de la première unité de suspension et/ou d'amortissement fluidique et d'une deuxième unité de suspension et/ou d'amortissement fluidique étant prévu,
**caractérisé en ce que** le chariot (12, 13) est supporté par le biais d'un support sur palier oscillant sur le châssis de la carrosserie du véhicule,
**en ce que** toutes les unités de suspension et/ou d'amortissement fluidiques comprennent chacune au moins une unité linéaire hydraulique en forme de cylindre de support (30, 40), lesquelles sont accouplées les unes aux autres hydrauliquement du côté de la pression,
et **en ce que** le système de fluide sous pression des unités de suspension et/ou d'amortissement fluidiques présente un accumulateur de pression hydropneumatique (48) pouvant être connecté.

2. Mécanisme de roulement à courroie (10) selon la revendication 1, dans lequel une variation de la raideur de ressort dépendant de l'amplitude est prévue.

3. Mécanisme de roulement à courroie (10) selon l'une quelconque des revendications précédentes, dans lequel le mécanisme de roulement (10) est réalisé sous forme de mécanisme de roulement à triangle.

4. Mécanisme de roulement à courroie (10) selon la revendication 3, dans lequel le mécanisme de roulement à triangle présente une roue d'entraînement centrale, située en haut (20).

5. Mécanisme de roulement à courroie (10) selon la revendication 1 ou 2, dans lequel le mécanisme de roulement (10) est réalisé sous forme de mécanisme de roulement en forme de clavette.

6. Mécanisme de roulement à courroie (10) selon l'une quelconque des revendications précédentes, dans lequel la coulisse du mécanisme de roulement (34) est disposée de manière décalée latéralement par rapport à la courroie (22).

7. Mécanisme de roulement à courroie (10) selon l'une quelconque des revendications précédentes, dans lequel la pression du système peut être réglée.

8. Mécanisme de roulement à courroie (10) selon l'une quelconque des revendications précédentes, dans lequel une régulation de niveau est possible au moyen d'un capteur de distance situé au moins au niveau de la coulisse (38) du chariot (12, 13) et d'une pression du système réglable en conséquence.

9. Châssis pour un véhicule agricole, notamment pour une machine agricole automotrice, une machine de travail agricole, un véhicule tout-terrain, et similaire, comprenant au moins deux mécanismes de roulement à courroie (10) selon au moins l'une quelconque des revendications 1 à 8, qui sont disposés sur des côtés longitudinaux opposés du véhicule.

10. Véhicule agricole, machine de travail agricole ou similaire, comprenant un châssis selon la revendication 9, qui présente au moins deux mécanismes de roulement à courroie (10) selon au moins l'une quelconque des revendications 1 à 8, qui sont disposés sur des côtés longitudinaux opposés du véhicule.
